# EUROPÄISCHE PATENTSCHRIFT

(11) **EP 3 463 775 B1**
(45) Veröffentlichungstag und Bekanntmachung des Hinweises auf die Patenterteilung: **02.09.2026**
(21) Anmeldenummer: 17729810.6
(22) Anmeldetag: 27.05.2017
(51) Int. Cl.: B27N 3/14

(54) **STREUANLAGE ZUR HERSTELLUNG EINER STREUGUTMATTE UND VERFAHREN ZUM BETREIBEN EINER SOLCHEN STREUANLAGE**
SCATTERING INSTALLATION FOR PRODUCING A SCATTERED PARTICLE MAT AND METHOD FOR OPERATING SUCH A SCATTERING INSTALLATION
SYSTÈME DE DISPERSION SERVANT À PRODUIRE UN MAT DE MATIÈRE DISPERSÉE ET PROCÉDÉ PERMETTANT DE FAIRE FONCTIONNER UN TEL SYSTÈME DE DISPERSION

(30) Priorität: 31.05.2016 DE 102016109987
(43) Veröffentlichungstag der Anmeldung: 10.04.2019
(73) Patentinhaber: Dieffenbacher GmbH Maschinen- und Anlagenbau, 75031 Eppingen (DE)
(72) Erfinder: VON HAAS, Gernot, 75031 Eppingen (DE)
(74) Vertreter: LBP Lemcke, Brommer & Partner Patentanwälte mbB
(86) Internationale Anmeldenummer: PCT/EP2017/062812
(87) Internationale Veröffentlichungsnummer: WO 2017/207446

(56) Entgegenhaltungen:
- EP-A1- 0 800 901
- EP-A1- 1 256 426
- EP-A1- 1 810 805
- EP-B1- 1 171 269
- DE-A1- 102007 049 947
- DE-A1- 102010 001 650
- DE-A1- 102013 226 510
- DE-A1- 19 846 106
- DE-A1- 3 818 117
- US-A- 5 171 498

## Beschreibung

Die vorliegende Erfindung betrifft eine Streuanlage zur Herstellung einer Streugutmatte nach dem Oberbegriff des Patentanspruches 1.

Darüber hinaus betrifft die vorliegende Erfindung auch ein Verfahren zum Betreiben einer solchen Streuanlage nach dem Oberbegriff des Anspruchs 12.

Insbesondere bei der Herstellung von Werkstoffplatten aus streufähigen Materialien wird ein Gemisch aus Partikeln oder faserigen Stoffen und einem Bindemittel zu einer Streugutmatte auf einem Form- oder Förderband gestreut, wobei die Streugutmatte anschließend einer ggf. nötigen Vorbehandlung und schließlich einer Verpressung zugeführt wird. Die Verpressung kann dabei kontinuierlich oder diskontinuierlich mittels Druck und/oder Wärme erfolgen. Bei den üblichen Werkstoffplatten, die hierbei hergestellt werden, handelt es sich normalerweise um MDF, Span- oder um OSB-Platten oder vergleichbare Mehrschichtplatten. Insbesondere bei OSB-Platten wird orientierbares Streugut verwendet, umfassend Feinst- (FK), Fein- (GK, KS, LS) und/oder Grobanteile (KB, LB). Aber auch Streugut für MDF oder Span ist per se sortierbar respektive klassierbar und kann über verschiedene Walzenanordnungen oder -typen differenziert abgestreut werden.

Die nachfolgenden Tabellen geben typische Parameter für orientierbares Streugut bei der OSB-Herstellung für Feinst- (FK), Fein- (GK, KS, LS) und/oder Grobanteile (KB, LB) wieder, deren beispielhaft angegebenes Verhältnis (5 : 75 : 20) je nach Streugut allerdings auch unterschiedlich ausfallen kann:

| | **Feinstanteil** | | |
|---|---|---|---|
| FK | Feinstspäne (Feinkorn) | | |
| | | Länge | < 4 mm |
| | | Breite | < 2 mm |
| | | Dicke | < 1 mm |

| | **Feinanteil** | | |
|---|---|---|---|
| GK | Späne | | |
| | | Länge | > 5 mm |

| | | | |
|---|---|---|---|
| | | | < 35 mm |
| | | Breite | < 5 mm |
| | | Dicke | < 1,5 mm |

| KS | Kurz-Schmal-Grobspan | | |
|---|---|---|---|
| | | Länge | > 35 mm |
| | | | < 100 mm |
| | | Breite | < 15 mm |
| | | Dicke | < 1,5 mm |

| LS | Lang-Schmal-Grobspan | | |
|---|---|---|---|
| | | Länge | > 100 mm |
| | | | < 250 mm |
| | | Breite | < 15 mm |
| | | Dicke | < 1,5 mm |

| | **Grobanteil** | | |
|---|---|---|---|
| KB | Kurz-Breit-Grobspan | | |
| | | Länge | > 100 mm |
| | | | < 250 mm |
| | | Breite | < 15 mm |
| | | Dicke | < 1,5 mm |

| LB | Lang-Breit-Grobspan | | |
|---|---|---|---|
| | | Länge | > 100 mm |
| | | | < 250 mm |
| | | Breite | < 15 mm |
| | | Dicke | < 1,5 mm |

Die Streuung des Streuguts erfolgt je nach Bedarf in ein, zwei oder mehreren Lagen (Streuschichten), wobei die Notwendigkeit insbesondere für längs- und quer-orientierte Streuschichten üblicherweise bei speziell differenzierten Anforderungen zwischen den Mittelschichten und ggf. optionalen Deckschichten bestehen.

Unterschieden werden in den Streustationen einer Streuanlage zwei Streumöglichkeiten; die direkte Streuung des Streuguts nach dem Dosierbunker, wobei mittels Leitblechen das Streugut direkt auf ein Formband geführt wird oder die indirekte Streuung über mindestens einen sogenannten Streukopf mit darin angeordneten Streuwalzensystemen. Bei der indirekten Streuung fällt das aus dem Dosierbunker ausgetragene Streugut auf sogenannte Streuwalzen, die das Streugut im Streukopf aufteilen und nötigenfalls auch sortieren. Die hierbei verwendeten Streuanordnungen sind in ihrer Vielfalt bereits hinreichend in der Patentliteratur beschrieben, wobei entweder eine mittige Aufgabe des Streugutes auf die Streuwalzen durchgeführt wird oder das Streugut an einem Ende der Streuwalzen aufgegeben wird. Dabei wird ein Teil des Streuguts weitertransportiert während ein anderer Teil durch die Streuwalzen hindurch solange auf das Formband fällt, bis nur noch ungeeignetes Streumaterial übrig bleibt und aus dem Herstellungsprozess entfernt werden muss. Beide Prinzipien haben sich bei der Produktion bewährt und werden mit Erfolg eingesetzt. Entsprechende Offenbarungen finden sich in: DE 10 2007 049 947 A1, DE 102 06 595 A1 oder EP 0 860 254 A1.

Die DE 10 2013 226 510 A1offenbart einen Streukopf mit einer Steuerungseinrichtung, die mindestens zwei Betriebskonfigurationen aufweist, um die Rotationsrichtung mindestens einer Spindel festzulegen, wobei durch die Auswahl einer der Betriebskonfigurationen mit demselben Streukopf unterschiedliche Produkte hergestellt werden können.

Die EP 0 800 901 A1 offenbart ein Verfahren und eine Vorrichtung zur Herstellung eines Vlieses, bei der das Streugut nach einer ersten mechanischen und pneumatischen Auflösung einer regelbaren weiteren mechanischen Auflösung unterworfen wird, um Streufehler zu korrigieren.

Die DE 10 2007 049 947 A1 offenbart einen Streukopf zur Herstellung einer Streugutmatte, bei dem die Späne nach einer Auflösung einem Anteil einer Querorientierungsvorrichtung und einem anderen Anteil einer Längsorientierungsvorrichtung zugeführt werden.

Jede Streuung an Streugut umfassend MDF, Span oder bei der OSB-Herstellung Feinst- (FK), Fein- (GK, KS, LS) und/oder Grobanteile (KB, LB) bringt Probleme bei Herstellung hochgenauer Flächengewichtsverteilungen mit sich. Insbesondere bei einer Streuung mit einem hohen Durchsatz an Streugut und bei einer orientierten Streuung kann eine Einbuße der Streugüte einhergehen durch Fehlorientierungen wie insbesondere diagonal aus einer Streuschichtebene herausstehende Lang-Schmal-Grobspan (LS) und/oder Lang-Breit-Grobspäne (LB) sowie Fehlhäufungen zu Streunestern oder andere Flächengewichtsungenauigkeiten in einer gestreuten Streugutmatte, welche die spätere Qualität der Werkstoffplatte verschlechtern.

Es sind aus dem Stand der Technik unterschiedliche Varianten an Streuköpfen für Streuanlagen bekannt. Bei einer Spanstreuung für Spanplatten beispielsweise werden Späne als Streugut mittels einer Separiervorrichtung, meist ein Walzenstreukopf oder ein Windsichter, nach Größe und/oder Dichte sortiert und nacheinander auf einem Formband abgelegt. Dabei werden in der Regel Feinstanteile wie vornehmlich Feinstspäne (FK) zuerst auf dem Formband abgelegt, anschließend werden die Feinanteile wie vornehmlich Späne (GK) und/oder Kurz- (KS) und Lang-(LS)-Schmal-Grobspan über das Feinstgut (FK) gestreut. Damit erhält man eine Streugutmatte, die eine feine Deckaußenschicht und eine zweite gröbere Deckinnenschicht enthält.

Je nach Betriebsverfahren sowie Anordnung und/oder Ausführung der Streuköpfe in der Streuanlage können nun alternativ oder kumulativ weitere Schichten wie beispielsweise eine Außenschicht insbesondere aus schmalen Grobspänen (KS, LS) und/oder eine Innenschicht insbesondere aus breiten Grobspänen (KB, LB) aufgestreut werden. Letztendlich lassen sich so beliebige Streugutmatten mit definierter Schichtabfolge aus Streugut unterschiedlicher Dichte und/oder Qualität planmäßig zusammenstellen.

Dem bekannten Stand der Technik ist in der Regel gemein, dass die Streuanlagen, Streuwalzensysteme oder Streuköpfe für einen bestimmten Plattentypen ausgelegt sind und insoweit in der Regel nur unterschiedliche Produktionskapazitäten pro Zeiteinheit ausgleichen können. Zur Veränderung des Aufbaues einer Streugutmatte werden demgemäß in einer Anlage verschiedene Streuköpfe in ihrer vorgegebenen Reihenfolge aktiviert oder deaktiviert, in der Regel aber auch nur dann möglich, wenn es sich um eine hochkomplexe Anlage mit einer Vielzahl an Streuköpfen handelt.

Allerdings ist bei einem jeden Wechsel der Schichtabfolge beim bisherigen Stand der Technik auch bekannt zur Erzielung verschieden aufgebauter Streugutmatten eine mitunter aufwendige Umrüstung in Anordnung und/oder Ausführung der benötigten Streuköpfe durchzuführen, mit dem Nachteil damit einhergehender Umrüst- und Standzeiten der Streu- respektive der Gesamtanlage.

Hiervon ausgehend liegt der vorliegenden Erfindung die Aufgabe zugrunde, eine gegenüber dem Stand der Technik verbesserte Streuanlage nebst diesbezüglichem Betriebsverfahren bereitzustellen.

Insbesondere sollen Umrüst- und Standzeiten weitgehend vermieden werden.

Darüber hinaus soll die Streugüte vornehmlich in den für die Qualität einer Werkstoffplatte verantwortlichen Außen- und/oder Deckschichten verbessert werden.

Diese Aufgabe wird durch eine Streuanlage sowie ein Betriebsverfahren mit den Merkmalen der unabhängigen Patentansprüche gelöst.

Die Lösung für die Streuanlage besteht darin, dass der Streukopf wenigstens einen ersten Aufgabebereich und wenigstens einen zu diesem in Produktionsrichtung beabstandeten zweiten Aufgabebereich zur Aufgabe des Streugutes aufweist, wobei die Ausgabevorrichtung eine Leitvorrichtung zur wahlweisen Umschaltung zwischen den Aufgabebereichen umfasst, und dass zumindest eine, bevorzugt alle Walzen der Walzenanordnung geeignet sind ihre Drehrichtung zu ändern.

Es kann weiterhin vorgesehen sein, dass der Streukopf zumindest zwei Aufgabeöffnungen aufweist, wobei jeder Aufgabeöffnung wenigstens ein Aufgabebereich zugeordnet ist.

Alternativ oder in Kombination kann vorgesehen sein, dass die Ausgabevorrichtung eine im Dosierbunker angeordnete Austragsvorrichtung umfasst, welche das Streugut planmäßig auf geschwindigkeitsabhängige Parabelbahnen beschleunigt und somit wahlweise einem Aufgabebereich zuführt.

Alternativ oder in Kombination kann vorgesehen sein, dass die Leitvorrichtung am Dosierbunker, am Streukopf und/oder dazwischen angeordnet ist.

In einer besonders bevorzugten Alternative ist in dem Streukopf zumindest eine separierende Streuvorrichtung zur klassierenden Streuung entlang der Produktionsrichtung angeordnet ist, wobei ganz besonders bevorzugt zur Herstellung zumindest eines Teils einer zumindest teilweise orientiert gestreuten zumindest zwei Streuschichten aufweisenden Streugutmatte, im Streukopf
eine Querorientierungsvorrichtung,
eine Längsorientierungsvorrichtung,
eine Walzenstreuvorrichtung und/oder
eine Speichenstreuvorrichtung
in Produktionsrichtung ggfs. in beliebiger Reihenfolge über dem Formband zur wahlweisen, jeweils eine Streuschicht repräsentierenden längs-, quer- und/oder unorientierten Streuung des Streuguts angeordnet sind. Dabei kann zur Separierung des Streuguts eine Auflösevorrichtung im Streukopf zwischen den Aufgabebereichen und den Vorrichtungen Orientierungs- und/oder Streuvorrichtungen angeordnet sein. Alternativ oder in Kombination kann vorgesehen sein, dass eine Auflösevorrichtung mit in Abhängigkeit von dem gewählten Aufgabebereich in oder entgegen der Produktionsrichtung P in Rotation versetzbaren Walzen, bevorzugt Stachelwalzen, angeordnet ist.

Alternativ oder in Kombination kann vorgesehen sein, dass auch die Walzen einer optionalen Verteileinrichtung und/oder einer Orientierungs- und/oder Streueinrichtung mit in Abhängigkeit von dem gewählten Aufgabebereich in oder entgegen der Produktionsrichtung P korrespondierend zur Auflösevorrichtung in Rotation versetzbar sind.

Alternativ oder in Kombination kann vorgesehen sein, dass zwischen der Auflösevorrichtung und den Vorrichtungen eine Verteilvorrichtung und/oder, vorzugsweise verschwenkbare, Leitbleche angeordnet sind.

Alternativ oder in Kombination kann vorgesehen sein, dass für die wahlweise Zuführung des Streuguts über den ersten oder den zweiten Aufgabebereich eine Steuervorrichtung zur Einstellung variabler Maschinenelemente der Dosiervorrichtung, der Ausgabevorrichtung, der Leitvorrichtung und/oder des Streukopfes vorgesehen ist.

Alternativ oder in Kombination kann vorgesehen sein, dass zur Streuung des Streuguts im Streukopf zumindest eine Längsorientierungsvorrichtung mit einer Gruppe aus senkrecht zur Produktionsrichtung parallel zueinander ausgerichteter Scheibenwalzen mit radial zur axialen Erstreckung der Walzen ausgerichteten parallelen Scheiben über dem Formband angeordnet ist, wobei ausgehend von einer Seite der Gruppe die Scheiben innerhalb einer Scheibenwalze jeweils in einem größeren Abstand zueinander angeordnet sind als die Scheiben der darauffolgenden Scheibenwalze.

Die Lösung für ein Verfahren zum Betrieb einer Streuanlage besteht darin, dass zur Veränderung der Streueigenschaften des Streukopfes die Aufgabe des Streugutes zwischen einem ersten Aufgabebereich und wenigstens einen zu diesem in Produktionsrichtung P beabstandeten zweiten Aufgabebereich des Streukopfes, wobei die Aufgabe des Streugutes in den Streukopf mittels einer wahlweise zwischen dem ersten und zweiten Aufgabebereich umschaltbaren Leitvorrichtung erfolgt, und dass zumindest eine, bevorzugt alle Walzen der Walzenanordnung in ihrer Drehrichtung verändert werden.

Es kann bevorzugt weiter vorgesehen sein, dass bei dem eine im Dosierbunker angeordnete Austragsvorrichtung der Ausgabevorrichtung so angesteuert wird, dass das Streugut planmäßig auf geschwindigkeitsabhängige Parabelbahnen beschleunigt und so wahlweise einem Aufgabebereich zugeführt wird.

Alternativ oder in Kombination kann vorgesehen sein, dass die Walzen einer Auflösevorrichtung, einer optionalen Verteileinrichtung und/oder einer Orientierungs- und/oder Streueinrichtung mit in Abhängigkeit von dem gewählten Aufgabebereich in oder entgegen der Produktionsrichtung, vorzugsweise korrespondierend zur Auflösevorrichtung, rotieren.

Alternativ oder in Kombination kann vorgesehen sein, dass eine Steuervorrichtung variable Maschinenelemente der Ausgabevorrichtung und/oder des Streukopfs korrespondierend zum jeweils gewähltem Aufgabebereich einstellt.

Vorteilhafte Aus- und Weiterbildungen, welche einzeln oder in Kombination miteinander eingesetzt werden können, sind Gegenstand der abhängigen Ansprüche.

Durch die wahlweise Zuführung des Streuguts über einen ersten oder einen zweiten Aufgabebereich ist vorteilhaft eine Streugutmatte mit veränderter Schichtabfolge erhältlich, ohne dass es einer Umrüst- und Standzeit in der Streuanlage bedarf.

Die erfindungsgemäße Streuanlage eignet sich vorzugsweise zum Einsatz in einem Fertigungswerk zur automatisierten Herstellung MDF, Span oder von als OSB- und insbesondere als FineOSB ausgebildete Werkstoffplatten. Erstere genügen dabei vorteilhaft den im Haus- und Bodenbelagsbau anzutreffenden mechanischen Anforderungen wie insbesondere die der Biegefestigkeit einer Platte. Letztere entsprechen vorteilhaft den gemeinhin gestiegenen ästhetischen Anforderungen, wie bspw. im Möbelbau gefordert. Insbesondere weist diese Platte eine beschichtbare und/oder bedruckbare Oberfläche auf.

Weitere Vorteile der Erfindung werden nachfolgen anhand von Ausführungsbeispielen und in Verbindung mit der Zeichnung beschrieben.

Darin zeigen schematisch:
- Fig. 1: ein erstes Ausführungsbeispiel einer Streuanlage nach der Erfindung zur Herstellung eines Teiles einer Streugutmatte;
- Fig. 2.: ein zweites Ausführungsbeispiel einer Streuanlage nach der Erfindung zur Herstellung eines Teiles einer Streugutmatte; und
- Fig. 3: ein drittes Ausführungsbeispiel umfassend eine Kombination zweier Streuanlagen zur Herstellung einer dreischichtigen Streugutmatte.

Bei der nachfolgenden Beschreibung der bevorzugten Ausführungsformen zur Herstellung von Werkstoffplatten respektive der Herstellung von Streugutmatte zur späteren Verpressung/Aushärtung nach der vorliegenden Erfindung bezeichnen gleiche Bezugszeichen gleiche oder vergleichbare Komponenten. Neben dem Nutzen für die Herstellung einer Streugutmatte aus MDF (mitteldichten Fasern) oder Spänen ist die Herstellung einer Streugutmatte für eine orientiert gestreute Platte (OSB) wohl die komplexeste Anordnung und die Erfindung zeigt hier auch ihren größten Nutzen.

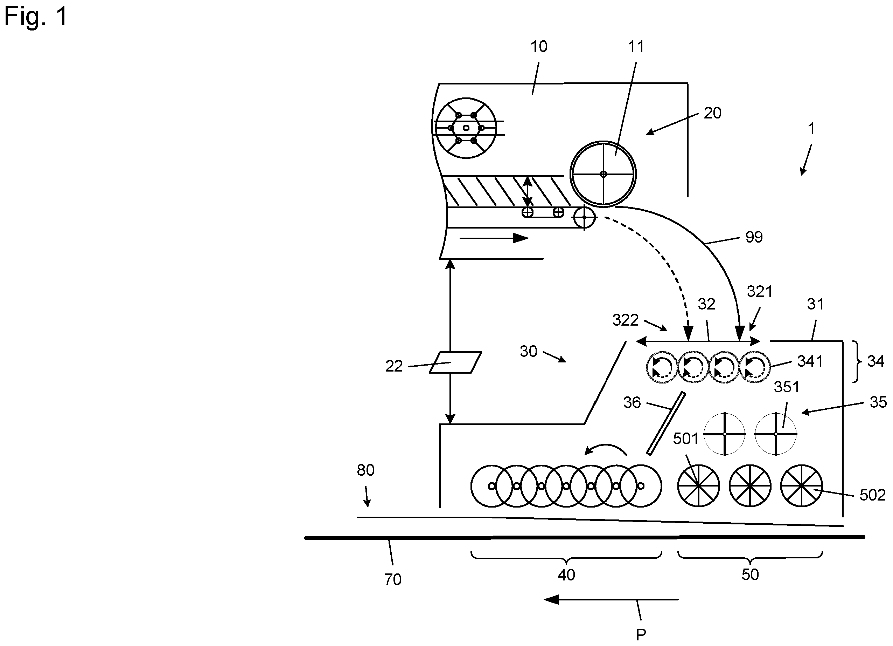

Fig. 1 zeigt ein erstes Ausführungsbeispiel einer Streuanlage 1 nach der Erfindung zur Herstellung eines Teiles einer Streugutmatte 80, die auf einem in Fallrichtung eines Streugutes 99 unter einem Streukopf 30 angeordneten endlos umlaufenden Formband 70 geformt wird, und die insbesondere im Zuge der Herstellung von Werkstoffplatten mittels Druck und/oder Wärme in einer Presse (nicht dargestellt) verpresst und/oder ausgehärtet wird.

Die in Fig. 1 dargestellte Anlage 1 umfasst wenigstens einen Dosierbunker 10 zur zumindest temporären Aufnahme von Streugut 99 und einen Streukopf 30 zur Streuung des Streuguts 99 auf das unter dem Streukopf 30 angeordnete Formband 70. Der Streukopf 30 weist an seiner Oberseite 31 zumindest eine Aufgabeöffnung 32 auf, über welche aus dem Dosierbunker 10 über eine Ausgabevorrichtung 20 austretendes Streugut 99 dem Streukopf 30 zugeführt wird. Demnach weist der Streukopf 30 wenigstens einen ersten Aufgabebereich 321; 331 und wenigstens einen zu diesem in oder entgegen der Produktionsrichtung P beabstandeten zweiten Aufgabebereich 322; zur Aufgabe des Streugutes 99 auf. Durch die unterschiedliche Verwendung der Aufgabebereiche wird die Streusystematik des Streukopfes signifikant geändert wie noch zu zeigen ist. Alternativ oder in Kombination vermag bereits die Drehrichtungsänderung einer oder mehrere Walzen im Streukopf ebenfalls eine sinnvolle Veränderung der Streusystematik im Streukopf und damit einen verschiedenen Aufbau einer Streugutmatte 80 bewirken.

Somit kann der Streukopf 30 an seiner Oberseite 31 eine Aufgabeöffnung 32 aufweisen, welcher zwei Aufgabebereiche 321, 322 zugeordnet sind.

Ebenfalls in Fig. 1 ersichtlich ist, wie die Ausgabevorrichtung 20 eine im Dosierbunker 10 angeordnete Austragsvorrichtung 11 umfassen kann, welche das Streugut 99 planmäßig auf geschwindigkeitsabhängige Parabelbahnen beschleunigt und somit wahlweise einem Aufgabebereich 321, 322 zuführt. So kann beispielsweise bei stärkerer Beschleunigung das Streugut 99 dem ersten Aufgabebereich 321 zugeführt werden (in Fig. 1 mit einer als durchgezogener Pfeil dargestellten Parabelbahn verdeutlicht) und bei weniger starker Beschleunigung das Streugut 99 dem zweiten Aufgabebereich 322 zugeführt werden (in Fig. 1 mit einer als gestrichelter Pfeil dargestellten Parabelbahn verdeutlicht).

Die weiteren Details des Streukopfes werden später erläutert.

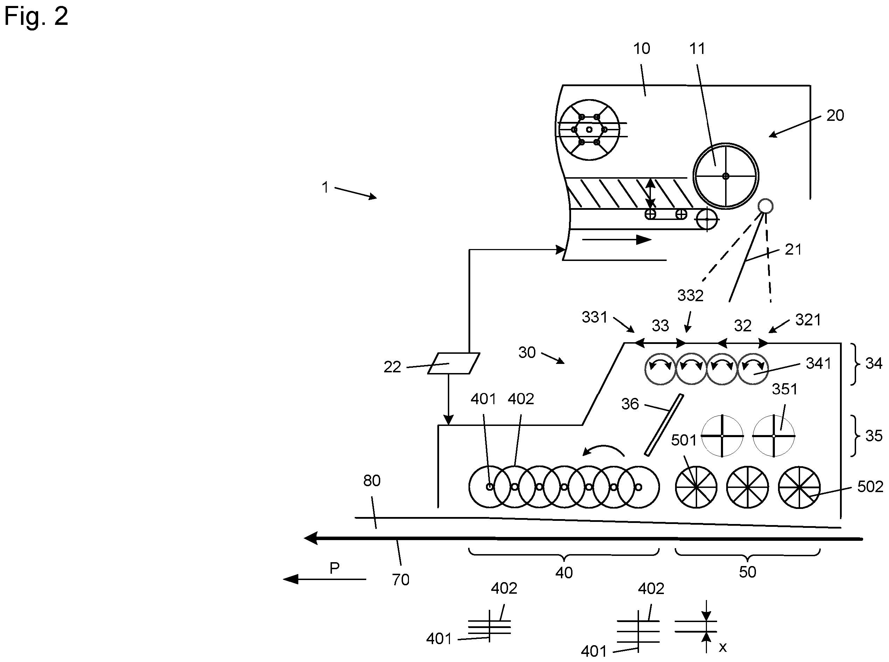

Fig. 2 zeigt ein zweites Ausführungsbeispiel einer Streuanlage 1 nach der Erfindung zur Herstellung eines Teiles einer Streugutmatte 80.

Wie in Fig. 2 dargestellt, kann der Streukopf 30 an seiner Oberseite 31 auch zumindest zwei Aufgabeöffnungen 32 ; 33 aufweisen, wobei jeder Aufgabeöffnung 32 ; 33 wenigstens ein Aufgabebereich 321, 322 ; 331, 332 zugeordnet ist. So kann beispielsweise - wie dargestellt - der ersten Aufgabeöffnung 32 lediglich ein Aufgabebereich 321 und können der zweiten Aufgabeöffnung 33 zwei Aufgabebereiche 331 und 332 zugeordnet sein.

Alternativ oder kumulativ zu der in Fig. 1 dargestellten Austragsvorrichtung 11 kann zur wahlweisen Umschaltung zwischen den Aufgabebereichen 321 und 331 oder 332 eine Leitvorrichtung 21 am Dosierbunker 10 (wie in Fig. 2 dargestellt) und/oder am Streukopf 30 und/oder dazwischen angeordnet sein. In dem in Fig. 2 dargestellten Ausführungsbeispiel wird ersichtlich, wie das Streugut 99 mittels einer auf den ersten Aufgabebereich 321 ausgerichteten Leitvorrichtung 21 zugeführt werden kann, welcher Aufgabebereich 321 beispielsweise durch die erste Öffnung 32 gebildet sein kann.

In einer bevorzugten Ausgestaltung einer Streuanlage 1 kann zur Herstellung zumindest eines Teils einer zumindest teilweise orientiert gestreuten zumindest zwei Streuschichten 83, 84, 85 aufweisenden Streugutmatte 80, im Streukopf 30 eine Querorientierungsvorrichtung 50, eine Längsorientierungsvorrichtung 40, eine Speichenstreuvorrichtung (nicht dargestellt) und/oder eine Walzenstreuvorrichtung in Produktionsrichtung P in beliebiger Reihenfolge über dem Formband 70 zur wahlweisen, jeweils eine Streuschicht 83, 84, 85 repräsentierenden längs-, quer- und/oder unorientierten Streuung des Streuguts 99 angeordnet sein. Eine Walzenstreuvorrichtung mag beispielsweise als Auflösevorrichtung 34 verwirklicht sein, kann aber auch anstelle der Querorientierungsvorrichtung 50 und/oder der Längsorientierungsvorrichtung 40 angeordnet sein.

Typische Orientierungseinrichtungen sind insbesondere Längsorientierungsvorrichtungen 40 (mit in Scheibenwalzen 401 zusammengestellten gleich beabstandeten Scheiben 402) sowie Querorientierungsvorrichtungen 50 (mit Fächerwalzen 501), welche das Streugut 99 jeweils längs bzw. quer-orientiert auf einem Formband 70 ablegen. Darüber hinaus sind auch sogenannte Speichenstreuvorrichtungen mit Speichenwalzen (nicht dargestellt) bekannt, welche das Streugut 99 in Produktionsrichtung P in beliebiger Reihenfolge auf einem Formband 70 ablegen.

Dabei hat sich zur indirekten Aufgabe und Separierung des Streuguts 99 die Anordnung einer Auflösevorrichtung 34 im Streukopf 30 zwischen den Aufgabebereichen 321, 331; 322, 332 und den Vorrichtungen 40, 50 bewährt.

Die Auflösevorrichtung 34 besteht dabei vorzugsweise aus Stachelwalzen 341, je nach Anwendungsfall auch in unterschiedlicher Größe oder Ausstattung der Stacheln (nicht dargestellt). Dieser kann optional eine (weiter unten beschriebene) Verteilvorrichtung 35 mit weiteren Fächerwalzen 351 mit beispielsweise vier Fächern nachgelagert sein. Durch die Auflösevorrichtung 34 und ggf. Verteilvorrichtung 35 wird (anders als bei einer direkten Aufgabe) zunächst eine großflächige Verteilung des Streugutes 99 im Streukopf 30 bewirkt, insbesondere auch eine Separierung des Streuguts in feine (KS, LS) und grobe (KB, LB) Hack- bzw. Hobelspäne-Fraktionen über die Länge des Streukopfes 30 in oder entgegen der Produktionsrichtung P.

Bei Querorientierungsvorrichtungen 50, welche sich durch eine Gruppe senkrecht zur Produktionsrichtung P parallel zueinander ausgerichteter Fächerwalzen 501 mit daran quer zur Produktionsrichtung P angeordneten Fächern 502 auszeichnen, ist ferner erfindungsgemäß bevorzugt, diesen eine Verteilvorrichtung 35 aus Fächerwalzen 351 mit beispielsweise vier Fächern vorzulagern.

Damit nun in Abhängigkeit von einem gewählten Aufgabebereich 321, 331; 322, 332 eine Separierung des Streuguts 99 zunächst in Fein- (LS, KS) und Grobanteile (LB, KB) erfolgen kann, hat sich erfindungsgemäß bevorzugt eine Auflösevorrichtung 34 mit in oder entgegen der Produktionsrichtung P in Rotation versetzbaren Stachelwalzen 341 bewährt.

So gelangen bei den Ausführungsbeispielen gemäß Fig. 1 und 2, durch Wahl der Ausgabeöffnung 321 und Wahl der Rotationrichtung der Auflösevorrichtung 34 in Produktionsrichtung P, zunächst feine Hackspäne-Fraktionen (KS, LS) auf eine Querorientierungsvorrichtung 50 (mit Fächerwalzen 501 mit beispielsweise acht Fächern) und grobe Hobelspäne-Fraktionen (KB, LB) auf eine Längsorientierungsvorrichtung 40 (mit Scheibenwalzen 401), welche die jeweiligen Fraktionen also jeweils quer- bzw. längs-orientiert auf das Formband 70 ablegen.

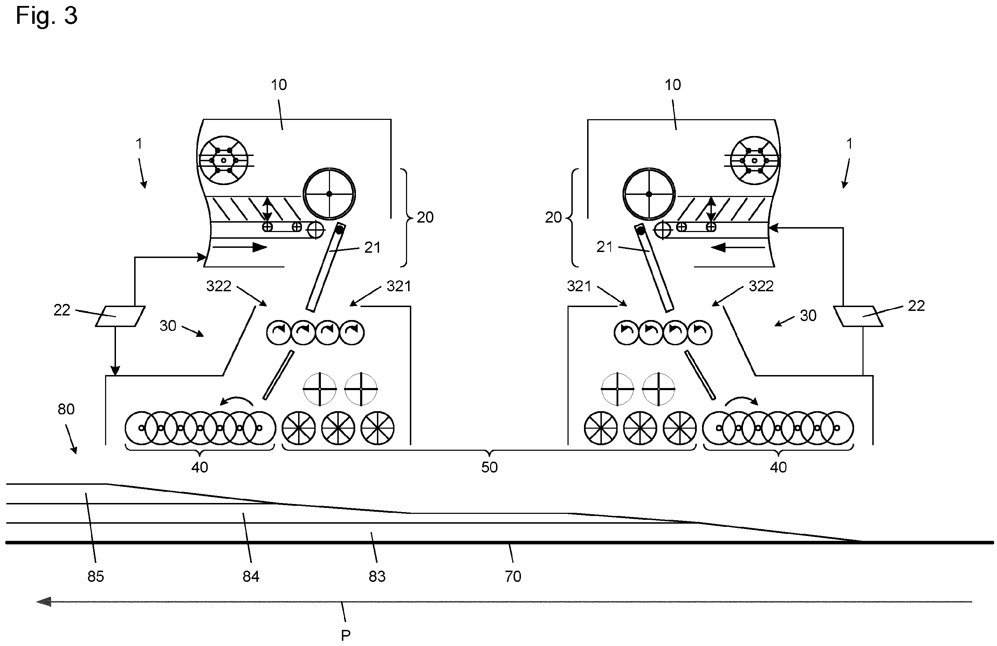

Demgegenüber gelangen bei den in Fig. 1 und 3 dargestellte Ausführungsbeispielen, durch Wahl der Ausgabeöffnung 322 und Wahl der Rotationrichtung der Auflösevorrichtung 34 entgegen der Produktionsrichtung P (so in Fig. 1 und in Fig. 3 für den linken Streukopf 30 dargestellt - die Auflösevorrichtung 34 im spiegelverkehrten rechten Streukopf 30 von Fig. 3 dreht sich dagegen mit der Produktionsrichtung P), nunmehr grobe Hobelspäne-Fraktionen (KB, LB) auf die Querorientierungsvorrichtung 50 (mit Fächerwalzen 501 umfassend beispielsweise acht Fächer 502) und nunmehr feinere Hackspäne-Fraktionen (KS, LS) auf die Längsorientierungsvorrichtung 40 (mit Scheibenwalzen 401), welche die jeweiligen Fraktionen also jeweils quer- bzw. längs-orientiert auf das Formband 70 abgelegen.

Gleichsam hat sich auch eine Ausgestaltung bewährt, bei der auch die Walzen 351; 401, 501 einer optionalen Verteileinrichtung 35 und/oder einer Orientierungs- 40, 50 und/oder Streueinrichtung (nicht dargestellt) mit in Abhängigkeit von dem gewählten Aufgabebereich 321, 331; 322, 332 in oder entgegen der Produktionsrichtung P korrespondierend zur Auflösevorrichtung 34 in Rotation versetzbar sind.

In einer weiteren Ausgestaltung hat sich bewährt, zwischen der Auflösevorrichtung 34 und den Vorrichtungen 40, 50 eine Verteilvorrichtung 35 und/oder Leitbleche 36 anzuordnen, wobei die Leitbleche 36 vorzugsweise verschwenkbar ausgebildet sind.

Schließlich hat sich für die wahlweise Zuführung des Streuguts 99 über den ersten 321, 331 oder den zweiten 322, 332 Aufgabebereich eine Steuervorrichtung 22 zur Einstellung variabler Maschinenelemente der Ausgabevorrichtung 20 und/oder des Streukopfes 30 bewährt. An variablen Maschinenelementen umfasst die Ausgabevorrichtung 20 insbesondere die Austragsvorrichtung 11 sowie die Leitvorrichtung 21 und der Streukopf 30 insbesondere die Auflösevorrichtung 34, die Verteilvorrichtung 35, die Leitbleche 36 (soweit verschwenkbar ausgebildet) sowie die Längs- 40 und/oder Querorientierungsvorrichtung 50 und/oder eine Speichenstreuvorrichtung (nicht dargestellt).

Alternativ oder kumulativ zu einer Separierung wie zuvor beschriebenen kann sich schließlich eine Klassifizierung von Hack- oder Hobelspäne in kurze (KS, KB) und lange (LS, LB) Fraktionen als vorteilhaft erweisen. Soweit dabei zur Streuung des Streuguts 99 im Streukopf 30 zumindest eine Längsorientierungsvorrichtung 40 mit einer Gruppe aus senkrecht zur Produktionsrichtung P parallel zueinander ausgerichteter Scheibenwalzen 401 mit radial zur axialen Erstreckung der Walzen 401 ausgerichteten parallelen Scheiben 402 über dem Formband 70 angeordnet ist, ist zum Zwecke einer klassifizierten Streuung des Streuguts 99 innerhalb einer Streuschicht eine Ausgestaltung bevorzugt, bei welcher ausgehend von einer Seite der Gruppe die Scheiben 402 innerhalb einer Scheibenwalze 401 jeweils in einem größeren Abstand x zueinander angeordnet sind als die Scheiben 402 der darauffolgenden Scheibenwalze 401. Dabei gelangen bei dem Ausführungsbeispiel gemäß **Fig. 2** vorseparierte grobe Hobelspäne (KB, LB) auf die Längsorientierungseinrichtung 40 und durch die Wahl der Scheibenabstände x in Produktionsrichtung P von weit zu eng dann zunächst kurze breite Hobelspäne (KB) auf das Formband 70 gefolgt von langen breiten Hobelspänen (LB) . Desweiteren gelangen vorseparierte feine Hackspäne (KS, LS) auf die Querorientierungseinrichtung 50 und durch die dieser optional vorgelagerten Verteilvorrichtung 35, welche vorzugsweise kurze Hackspäne (KS) passieren lässt und lange Hackspäne (LS) in der Produktionsrichtung P weiterleitet, zunächst kurze schmale Hackspäne (KS) auf das Formband 70 gefolgt von langen schmalen Hackspänen (LS).

Die in **Fig. 2** gezeigte Anordnung ist insbesondere vorteilhaft bei der Herstellung sogenannter OSB-Platten für den Haus- und Bodenbelagsbau mit grobanteiligem (LB, KB) Streugut 99 an den Außenschichten 83, 85.

**Fig. 3** zeigt ein drittes Ausführungsbeispiel umfassend eine Kombination zweier Streuanlagen 1, mitunter auch als Doppelkopfstreuanlage bezeichnet, zur Herstellung einer dreischichtigen 83, 84, 85 Streugutmatte 80 mittels zweier spiegelbildlich zueinander angeordneten Streuköpfen 30. Der Aufbau der beiden Streuköpfe 30 ist dementsprechend in Produktionsrichtung P ebenfalls zueinander gegensätzlich angeordnet, so dass sich nach Bildung einer Außenschicht 83, 85 aus vorzugsweise längs orientiert gestreutem Feinanteilen (LS, KS) im Streugut 99 mittels einer Längsorientierungsvorrichtung 40 eine zweifache Streuung aus querorientiertem Grobanteilen (KB, LB) im Streugut 99 aus den beiden Querstreuvorrichtungen 50 der beiden Streuköpfe 30 anschließt. Diese zweifache Streuung bewirkt eine homogene Schicht aus querorientierte grobanteiligen (KB, LB) Streugut 99 die wiederum in Produktionsrichtung (auslassseitig des linken Streukopfes 30) mit einer längsorientierten Schicht aus feinanteiligem (LS, KS) Streugut 99 bedeckt wird, was schlussendlich der Erzeugung einer dreischichtigen Streugutmatte 80 aus zwei längsorientierten Außenschichten 83 und 85 und einer quer-orientierten Innenschicht 84 ergibt. Diese Anordnung ist insbesondere vorteilhaft bei der Herstellung sogenannter FineOSB für die Möbelindustrie mit feinanteiligem (LS, KS) Streugut 99 an den Außenschichten 83, 85.

Anders als in **Fig. 2** dargestellt wird bei dem in **Fig. 3** dargestellten Ausführungsbeispiel das Streugut 99 mittels der nunmehr zur Mitte des Streukopfes 30 geschwenkten und auf den zweiten Aufgabebereich 322 ausgerichteten Leitvorrichtung 21 zugeführt, welcher Aufgabebereich 322 beispielsweise Teil der ersten (einen) Öffnung 32 sein kann.

Durch die wahlweise Zuführung des Streuguts 99 über einen ersten 321; 331 oder einen zweiten 322; 332 Aufgabebereich ist vorteilhaft eine Streugutmatte 80 mit veränderter Schichtabfolge erhältlich, ohne dass es einer Umrüst- und Standzeit in der Streuanlage 1 bedarf. Da insbesondere die kürzeren Hack- und/oder Hobelspäne KS und KB tendenziell eine geringere Verweildauer auf einer Längs- 40 oder Quer- 50 Orientierungseinrichtung haben als die längeren Hack- und/oder Hobelspäne LS und LB, kann über den gewählten Aufgabebereich 321 oder 322 deren Ablagezeitpunkt in oder entgegen der Produktionsrichtung P bestimmt werden, während die längeren Hack- und/oder Hobelspäne LS und LB tendenziell unabhängig von dem gewählten Aufgabebereich 321 oder 322 nach ihrer Zwangsorientierung durch die jeweilige Orientierungseinrichtung 40, 50 im Wesentlichen unsepariert, also ohne Separierung in schmale (KS, LS) und breite (KB, LB) Hack- und/oder Hobelspäne-Fraktionen, in oder entgegen der Produktionsrichtung P abgelegt werden.

Zusammenfassend hat sich somit gezeigt, dass durch eine Umschaltung der Aufgabebereiche an einem Streukopf die Art und Weise der Streuung oder des Aufbaus einer Streugutmatte veränderlich ist und sinnvoll einsetzbar ist um eine größere Vielzahl an Varianten an Produkten herzustellen. Dies kann insbesondere auch durch oder in Kombination mit einer Drehrichtungsänderung einer oder mehrerer Walzen zumindest einer Walzenstreuvorrichtung (Längs, Quer, Span, Fasern) durchgeführt und erzielt werden. Beispielhaft wäre es somit möglich einen Streukopf nach Figur 2 somit beispielsweise von einer reinen Längsstreuung, Aufgabeöffnung 33 und Rotation respektive Streuguttransport in Produktionsrichtung der Auflösevorrichtung 34,auf eine Kombistreuung (längs und quer) bei einer Drehrichtungsänderung/Streuguttransportrichtung entgegen (gestrichelte Pfeile) der Produktionsrichtung P umzuschalten. Wird beispielsweise bei dieser Drehrichtung der Walzen in der Auflösevorrichtung 34 die andere Aufgabeöffnung 32 angesteuert, wird nun eine reine Querstreuung durchgeführt. Wird von diesem Zustand ausgehend die Rotationsrichtung der Auflösevorrichtung 34 wieder geändert in Produktionsrichtung P (durchgehende Pfeile) so wird wiederum eine Kombistreuung (längs und quer) durchgeführt. Gegenüber der vorgenannten Kombistreuung verändert sich aber bei einer klassierenden Auflösevorrichtung 34 wiederum der Anteil der feinen und groben Späne in der Quer- und Längsstreuung.

### Bezugszeichenliste P1515:

- 1: Streuanlage
- 10: Dosierbunker
- 11: Austragsvorrichtung
- 20: Ausgabevorrichtung
- 21: Leitvorrichtung
- 22: Steuervorrichtung
- 30: Streukopf
- 31: Oberseite
- 32: (erste) Aufgabeöffnung
- 321: (erster) Aufgabebereich von 32
- 322: (zweiter) Aufgabebereich von 32
- 33: (zweite) Aufgabeöffnung
- 331: (erster) Aufgabebereich von 33
- 332: (zweiter) Aufgabebereich von 33
- 34: Auflösevorrichtung
- 341: Stachelwalzen
- 35: Verteilvorrichtung
- 351: Fächerwalzen
- 36: Leitblech
- 40: Längsorientierungsvorrichtung
- 401: Scheibenwalzen
- 402: Scheiben
- 50: Querorientierungsvorrichtung
- 501: Fächerwalzen
- 502: Fächer
- 70: Formband
- 80: Streugutmatte
- 83: (längsorientierte) Außenschicht
- 84: (querorientierte) Innenschicht
- 85: (längsorientierte) Außenschicht
- 99: Streugut
- P: Produktionsrichtung
- x: Abstand

### Stand der Technik

DE 10 2007 049 947 A1
DE 102 06 595 A1
EP 0 860 254 A1
EP 0 800 901 A1
DE 10 2013 226 510 A1

## Patentansprüche

1. Streuanlage (1) zur Herstellung einer Streugutmatte (80), die auf einem in Fallrichtung eines Streugutes (99) unter einem Streukopf (30) angeordneten endlos umlaufenden Formband (70) formbar ist,
mit wenigstens einem Dosierbunker (10) zur zumindest temporären Aufnahme von Streugut (90) wirkverbunden mit einer Ausgabevorrichtung (20) zur dosierten Ausgabe des Streugut (99) und
einen Streukopf (30) zur Streuung des Streuguts (99) auf das unter dem Streukopf (30) angeordnete Formband (70) zur Herstellung zumindest eines Teils der Streugutmatte (80),
wobei der Streukopf (30) zumindest eine Aufgabeöffnung (32) zur Aufnahme des Streugutes (99) und zumindest eine Walzenanordnung mit Walzen (341, 351, 401, 502), zur Manipulation und/oder Streuung des Streugutes (99) aufweist;
**dadurch gekennzeichnet,**
**dass** der Streukopf (30) wenigstens einen ersten Aufgabebereich (321; 331) und wenigstens einen zu diesem in Produktionsrichtung (P) beabstandeten zweiten Aufgabebereich (322; 332) zur Aufgabe des Streugutes (99) aufweist, wobei die Ausgabevorrichtung (20) eine Leitvorrichtung (21) zur wahlweisen Umschaltung zwischen den Aufgabebereichen (321, 331; 322, 332) umfasst, und
**dass** zumindest eine, bevorzugt alle Walzen (341, 351, 401, 502) der Walzenanordnung geeignet sind ihre Drehrichtung zu ändern.

2. Streuanlage (1) nach Anspruch 1, **dadurch gekennzeichnet, dass** der Streukopf (30) an seiner Oberseite (31) zumindest zwei Aufgabeöffnungen (32; 33) aufweist, wobei jeder Aufgabeöffnung (32; 33) wenigstens ein Aufgabebereich (321, 322; 331, 332) zugeordnet ist.

3. Streuanlage (1) nach Anspruch 1 oder 2, **dadurch gekennzeichnet, dass** die Ausgabevorrichtung (20) eine im Dosierbunker (10) angeordnete Austragsvorrichtung (11) umfasst, welche das Streugut (99) planmäßig auf geschwindigkeitsabhängige Parabelbahnen beschleunigt und somit wahlweise einem Aufgabebereich (321, 322; 331, 332) zuführt.

4. Streuanlage (1) nach einem der vorherigen Ansprüche 1 bis 3, **dadurch gekennzeichnet, dass** die Leitvorrichtung (21) am Dosierbunker (10), am Streukopf (30) und/oder dazwischen angeordnet ist.

5. Streuanlage (1) nach einem der vorherigen Ansprüche,
wobei in dem Streukopf (30) zumindest eine separierende Streuvorrichtung zur klassierenden Streuung entlang der Produktionsrichtung (P) angeordnet ist.

6. Streuanlage (1) nach einem der vorherigen Ansprüche,
wobei zur Herstellung zumindest eines Teils einer zumindest teilweise orientiert gestreuten zumindest zwei Streuschichten (83, 84, 85) aufweisenden Streugutmatte (80), im Streukopf (30)
- eine Querorientierungsvorrichtung (50),
- eine Längsorientierungsvorrichtung (40),
- eine Walzenstreuvorrichtung und/oder
- eine Speichenstreuvorrichtung
in Produktionsrichtung (P) in beliebiger Reihenfolge über dem Formband (70) zur wahlweisen, jeweils eine Streuschicht (83, 84, 85) repräsentierenden längs-, quer- und/oder unorientierten Streuung des Streuguts (99) angeordnet sind,
**dadurch gekennzeichnet, dass**
zur Separierung des Streuguts (99) eine Auflösevorrichtung (34) im Streukopf (30) zwischen den Aufgabebereichen (321, 331; 322, 332) und den Vorrichtungen (40, 50) angeordnet ist.

7. Streuanlage (1) nach einem der vorherigen Ansprüche, **gekennzeichnet durch** eine Auflösevorrichtung (34) mit in Abhängigkeit von dem gewählten Aufgabebereich (321, 331; 322, 332) in oder entgegen der Produktionsrichtung (P) in Rotation versetzbaren Walzen, bevorzugt Stachelwalzen (341).

8. Streuanlage (1) nach einem der vorherigen Ansprüche, **dadurch gekennzeichnet, dass** auch die Walzen (351; 401, 501) einer optionalen Verteileinrichtung (35) und/oder einer Orientierungs- (40, 50) und/oder Streueinrichtung mit in Abhängigkeit von dem gewählten Aufgabebereich (321, 331 ; 322, 332) in oder entgegen der Produktionsrichtung (P) korrespondierend zur Auflösevorrichtung (34) in Rotation versetzbar sind.

9. Streuanlage (1) nach einem der vorherigen Ansprüche 7 oder 8, **dadurch gekennzeichnet, dass** zwischen der Auflösevorrichtung (34) und den Vorrichtungen (40, 50) eine Verteilvorrichtung (35) und/oder, vorzugsweise verschwenkbare, Leitbleche (36) angeordnet sind.

10. Streuanlage nach einem der vorherigen Ansprüche, **dadurch gekennzeichnet, dass** für die wahlweise Zuführung des Streuguts (99) über den ersten (321, 331) oder den zweiten (322, 332) Aufgabebereich eine Steuervorrichtung (22) zur Einstellung variabler Maschinenelemente der Dosiervorrichtung (10), der Ausgabevorrichtung (20), der Leitvorrichtung (21) und/oder des Streukopfes (30) vorgesehen ist.

11. Streuanlage (1) nach einem oder mehreren der vorherigen Ansprüche, wobei zur Streuung des Streuguts (99) im Streukopf (30) zumindest eine Längsorientierungsvorrichtung (40) mit einer Gruppe aus senkrecht zur Produktionsrichtung (P) parallel zueinander ausgerichteter Scheibenwalzen (401) mit radial zur axialen Erstreckung der Walzen (401) ausgerichteten parallelen Scheiben (402) über dem Formband (70) angeordnet ist, **dadurch gekennzeichnet,**
**dass** ausgehend von einer Seite der Gruppe die Scheiben (402) innerhalb einer Scheibenwalze (401) jeweils in einem größeren Abstand (x) zueinander angeordnet sind als die Scheiben (402) der darauffolgenden Scheibenwalze (401).

12. Verfahren zum Betreiben einer Streuanlage (1) zur Herstellung einer Streugutmatte (80),
die auf einem in Fallrichtung eines Streugutes (99) unter einem Streukopf (30) angeordneten endlos umlaufenden Formband (70) geformt wird,
wobei das Streugut (99) zumindest temporär in einem Dosierbunker (10) aufgenommen und mit einer Ausgabevorrichtung (20) einer Aufgabeöffnung (32) eines Streukopfes (30) zur Manipulierung und/oder Streuung des Streuguts (99) mittels zumindest einer Walzenanordnung mit Walzen (341, 351, 401, 502) auf das unter dem Streukopf (30) angeordnete Formband (70) zur Herstellung zumindest eines Teils der Streugutmatte (80) zugeführt wird
**dadurch gekennzeichnet, dass**
zur Veränderung der Streueigenschaften des Streukopfes (30) die Aufgabe des Streugutes (99) zwischen einem ersten Aufgabebereich (321; 331) und wenigstens einen zu diesem in Produktionsrichtung (P) beabstandeten zweiten Aufgabebereich (322; 332) des Streukopfes (30) erfolgt, wobei die Aufgabe des Streugutes (99) in den Streukopf (30) mittels einer wahlweise zwischen dem ersten (321; 331) und zweiten Aufgabebereich (322; 332) umschaltbaren Leitvorrichtung (21) erfolgt, und
dass zumindest eine, bevorzugt alle Walzen (341, 351, 401 502) der Walzenanordnung in ihrer Drehrichtung verändert werden.

13. Verfahren nach Anspruch 12, bei dem eine im Dosierbunker (10) angeordnete Austragsvorrichtung (11) der Ausgabevorrichtung (20) so angesteuert wird, dass das Streugut (99) planmäßig auf geschwindigkeitsabhängige Parabelbahnen beschleunigt und so wahlweise einem Aufgabebereich (321, 322; 331, 332 ) zugeführt wird.

14. Verfahren nach einem der vorherigen Ansprüche 12 bis 13, bei dem die Walzen (341, 351; 401, 501) einer Auflösevorrichtung (34), einer optionalen Verteileinrichtung (35) und/oder einer Orientierungs- (40, 50) und/oder Streueinrichtung mit in Abhängigkeit von dem gewählten Aufgabebereich (321, 322; 331, 332) in oder entgegen der Produktionsrichtung (P), vorzugsweise korrespondierend zur Auflösevorrichtung (34), rotieren.

15. Verfahren nach einem der vorherigen Ansprüche 12 bis 14, bei dem eine Steuervorrichtung (22) variable Maschinenelemente der Ausgabevorrichtung (20) und/oder des Streukopfs korrespondierend zum jeweils gewählten Aufgabenbereich (321, 322; 331, 332) einstellt.

## Claims

1. A scattering installation (1) for producing a scattered particle mat (80), which can be formed on a continuously circulating forming belt (70) arranged below a scattering head (30) in the falling direction of scattered particles (99),
comprising at least one dosing bin (10) for at least temporarily receiving scattered particles (90), operatively connected to a discharge device (20) for the metered discharge of the scattered particles (99), and
a scattering head (30) for scattering the scattered particles (99) onto the forming belt (70) arranged below the scattering head (30) to produce at least a portion of the scattered particle mat (80),
wherein the scattering head (30) comprises at least one feed opening (32) for receiving the scattered particles (99) and at least one roller assembly with rollers (341, 351, 401, 502) for manipulating and/or scattering the scattered particles (99),
**characterized in that**
the scattering head (30) has at least one first feed region (321; 331) and at least one second feed region (322; 332) at a distance from the first region in the production direction (P) for feeding the scattered particles (99), wherein the discharge device (20) comprises a guide device (21) for selectively switching between the feed regions (321, 331; 322, 332), and **in that** at least one, preferably all, of the rollers (341, 351, 401, 502) in the roller assembly are capable of changing their direction of rotation.

2. The scattering installation (1) according to claim 1, **characterized in that** the scattering head (30) has at least two feed openings (32; 33) on its upper side (31), wherein at least one feed region (321, 322; 331, 332) is assigned to each feed opening (32; 33).

3. The scattering installation (1) according to claim 1 or 2, **characterized in that** the discharge device (20) comprises a discharge mechanism (11) arranged in the dosing bin (10), which accelerates the scattered particles (99) in a planned manner along velocity-dependent parabolic trajectories and thereby feeds it selectively to a feed region (321, 322; 331, 332).

4. The scattering installation (1) as claimed in one of the preceding claims 1 to 3, **characterized in that** the guide device (21) is arranged on the dosing bin (10), on the scattering head (30), and/or in between the latter.

5. The scattering installation (1) as claimed in one of the preceding claims, wherein at least one separating scattering device for classifying the scattering material along the production direction (P) is arranged in the scattering head (30).

6. The scattering installation (1) as claimed in one of the preceding claims, wherein, for producing at least a portion of a scattered particle mat (80) comprising at least two scattering layers (83, 84, 85) that are scattered at least partially oriented, there are arranged in the scattering head (30)
- a transverse orientation device (50),
- a longitudinal orientation device (40),
- a roller scattering device, and/or
- a spoke scattering device
in the production direction (P) in any order above the forming belt (70) for the selective, longitudinal, transverse and/or unoriented scattering of the scattered particles (99), each representing a scattering layer (83, 84, 85),
**characterized in that**
a dispersing device (34) is arranged in the scattering head (30) between the feed regions (321, 331; 322, 332) and the devices (40, 50) for separating the scattered particles (99).

7. The scattering installation (1) as claimed in one of the preceding claims, **characterized by** a dispersing device (34) with rollers, preferably spiked rollers (341), that can be set into rotation in or against the production direction (P) depending on the selected feed region (321, 331; 322, 332).

8. The scattering installation (1) as claimed in one of the preceding claims, **characterized in that** the rollers (351; 401, 501) of an optional distribution apparatus (35) and/or an orientation (40, 50) and/or scattering apparatus can also be set into rotation in or against the production direction (P) depending on the selected feed region (321, 331; 322, 332) in coordination with the dispersing device (34).

9. The scattering installation (1) as claimed in one of the preceding claims 7 or 8, **characterized in that** a distribution apparatus (35) and/or, preferably pivotable, deflector plates (36) are arranged between the dispersing device (34) and the devices (40, 50).

10. The scattering installation as claimed in one of the preceding claims, **characterized in that** a control device (22) is provided for adjusting variable machine elements of the dosing bin (10), the discharge device (20), the guide device (21), and/or the scattering head (30) for the selective feed of the scattered particles (99) via the first (321, 331) or the second (322, 332) feed region.

11. The scattering installation (1) as claimed in one or more of the preceding claims, wherein for scattering the scattered particles (99) in the scattering head (30), at least one longitudinal orientation device (40) is provided, comprising a group of disc rollers (401) aligned parallel to one another and perpendicular to the production direction (P), with parallel discs (402) oriented radially to the axial extension of the rollers (401) and arranged above the forming belt (70), **characterized in that**
starting from one side of the group, the discs (402) within a disc roller (401) are each spaced apart by a greater distance (x) than the discs (402) of the subsequent disc roller (401).

12. A method for operating a scattering installation (1) for producing a scattered particle mat (80), which is formed on a continuously circulating forming belt (70) arranged below a scattering head (30) in the falling direction of scattered particles, (99),
wherein the scattered particles (99) are at least temporarily received in a dosing bin (10) and are fed by a discharge device (20) from a feed opening (32) of a scattering head (30) for handling and/or scattering the scattered particles (99) by means of at least one roller assembly with rollers (341, 351, 401, 502) onto the forming belt (70) arranged underneath the scattering head (30) for the production of at least a portion of the scattered particle mat (80), **characterized in that**
to change the scattering characteristics of the scattering head (30), the feed of the scattered particles (99) is switched between a first feed region (321; 331) and at least one second feed region (322; 332) of the scattering head (30) spaced apart from the first feed region in the production direction (P), wherein the scattered particles (99) are fed into the scattering head (30) by means of a guide device (21) that can be selectively switched between the first (321; 331) and second feed region (322; 332), and
the direction of rotation of at least one, preferably all, of the rollers (341, 351, 401, 502) of the roller assembly is changed.

13. The method according to claim 12, wherein a discharge mechanism (11) of the discharge device (20), arranged in the dosing bin (10), is controlled such that the scattered particles (99) are accelerated in a planned manner along velocity-dependent parabolic trajectories and is thus selectively fed to a feed region (321, 322; 331, 332).

14. The method as claimed in one of the preceding claims 12 to 13, wherein the rollers (341, 351; 401, 501) of a dispersing device (34), an optional distribution apparatus (35), and/or an orientation (40, 50) and/or scattering apparatus are rotated in a manner dependent on the selected feed region (321, 322; 331, 332) in or against the production direction (P), preferably in correspondence with the dispersing device (34).

15. The method as claimed in one of the preceding claims 12 to 14, wherein a control device (22) adjusts variable machine elements of the discharge device (20) and/or the scattering head in accordance with the respectively selected feed region (321, 322; 331, 332).

## Revendications

1. Installation de dispersion (1) pour la fabrication d'un mat de matière dispersée (80) qui peut être formé sur une bande de formage (70) circulant en continu agencée sous une tête de dispersion (30) dans le sens de la chute d'une matière dispersée (99),
avec au moins un réservoir de dosage (10) pour la réception au moins temporaire de matière dispersée (90) relié activement à un dispositif de distribution (20) pour la distribution dosée de la matière dispersée (99) et
une tête de dispersion (30) pour la dispersion de la matière dispersée (99) sur la bande de formage (70) agencée sous la tête de dispersion (30) pour la production au moins d'une partie du mat de matière dispersée (80),
dans laquelle la tête de dispersion (30) présente au moins une ouverture de chargement (32) pour la réception de la matière dispersée (99) et au moins un ensemble de rouleaux avec des rouleaux (341, 351, 401, 502) pour la manipulation et/ou la dispersion de la matière dispersée (99) ;
**caractérisée en ce que**
la tête de dispersion (30) présente au moins une première zone de chargement (321 ; 331) et au moins une seconde zone de chargement (322 ; 332) espacée de celle-ci dans le sens de production (P) pour le chargement de la matière dispersée (99), dans laquelle le dispositif de distribution (20) comprend un dispositif de guidage (21) pour la commutation au choix entre les zones de chargement (321, 331 ; 322, 332) et **en ce qu'**au moins un, de préférence tous les rouleaux (341, 351, 401, 502) de l'ensemble de rouleaux sont appropriés afin de modifier leur sens de rotation.

2. Installation de dispersion (1) selon la revendication 1, **caractérisée en ce que** la tête de dispersion (30) présente au moins deux ouvertures de chargement (32 ; 33) au niveau de son côté supérieur (31), dans laquelle au moins une zone de chargement (321, 322 ; 331, 332) est associée à chaque ouverture de chargement (32 ; 33).

3. Installation de dispersion (1) selon la revendication 1 ou 2, **caractérisée en ce que** le dispositif de distribution (20) comprend un dispositif d'évacuation (11) agencé dans le réservoir de dosage (10) qui accélère la matière dispersée (99) de manière méthodique sur des bandes paraboliques dépendant de la vitesse et la fournit ainsi au choix à une zone de chargement (321, 322 ; 331, 332).

4. Installation de dispersion (1) selon l'une quelconque des revendications précédentes 1 à 3, **caractérisée en ce que** le dispositif de guidage (21) est agencé au niveau du réservoir de dosage (10), au niveau de la tête de dispersion (30) et/ou entre eux.

5. Installation de dispersion (1) selon l'une quelconque des revendications précédentes, dans laquelle au moins un dispositif de dispersion de séparation est agencé dans la tête de dispersion (30) pour la dispersion classifiante le long du sens de production (P).

6. Installation de dispersion (1) selon l'une quelconque des revendications précédentes, dans laquelle pour la production d'au moins une partie d'un mat de matière dispersée (80) présentant au moins deux couches de dispersion (83, 84, 85), dispersé de manière au moins partiellement orientée, dans la tête de dispersion (30),
- un dispositif d'orientation transversale (50),
- un dispositif d'orientation longitudinale (40),
- un dispositif de dispersion à rouleaux et/ou
- un dispositif de dispersion à rayons
sont agencés dans le sens de production (P) dans un ordre quelconque sur la bande de formage (70) pour la dispersion au choix de la matière dispersée (99) représentant respectivement une couche de dispersion (83, 84, 85), orientée longitudinalement, transversalement et/ou non orientée,
**caractérisée en ce que**
un dispositif de résolution (34) est agencé dans la tête de dispersion (30) entre les zones de chargement (321, 331 ; 322, 332) et les dispositifs (40, 50) pour la séparation de la matière dispersée (99).

7. Installation de dispersion (1) selon l'une quelconque des revendications précédentes, **caractérisée par** un dispositif de résolution (34) avec des rouleaux pouvant être amenés en rotation en fonction de la zone de chargement (321, 331 ; 322, 332) choisie dans ou dans le sens inverse au sens de production (P), de préférence des rouleaux à pointes (341).

8. Installation de dispersion (1) selon l'une quelconque des revendications précédentes, **caractérisée en ce que** les rouleaux (351 ; 401, 501) d'un dispositif de répartition (35) optionnel et/ou d'un dispositif d'orientation (40, 50) et/ou de dispersion peuvent également être amenés en rotation en fonction de la zone de chargement (321, 331 ; 322, 332) choisie dans ou dans le sens inverse au sens de production (P) de manière à correspondre au dispositif de résolution (34).

9. Installation de dispersion (1) selon l'une quelconque des revendications précédentes 7 ou 8, **caractérisée en ce qu'**un dispositif de répartition (35) et/ou des déflecteurs (36), de préférence pivotants, sont agencés entre le dispositif de résolution (34) et les dispositifs (40, 50).

10. Installation de dispersion selon l'une quelconque des revendications précédentes, **caractérisé en ce qu'**un dispositif de commande (22) pour le réglage d'éléments machine variables du dispositif de dosage (10), du dispositif de distribution (20), du dispositif de guidage (21) et/ou de la tête de dispersion (30) est prévu pour la fourniture au choix de la matière dispersée (99) par le biais de la première (321, 331) ou la seconde (322, 332) zone de chargement.

11. Installation de dispersion (1) selon l'une ou plusieurs quelconques des revendications précédentes, dans laquelle au moins un dispositif d'orientation longitudinale (40) avec un groupe de rouleaux à disque (401) orientés perpendiculairement au sens de production (P) parallèlement les uns aux autres avec des disques (402) parallèles orientés radialement à l'étendue axiale des rouleaux (401) est agencé au-dessus de la bande de formage (70) pour la dispersion de la matière dispersée (99) dans la tête de dispersion (30), **caractérisée en ce que**
à partir d'un côté du groupe, les disques (402) sont agencés respectivement à une plus grande distance (x) les uns des autres dans un rouleau à disque (401) que les disques (402) du rouleau à disque (401) suivant.

12. Procédé de fonctionnement d'une installation de dispersion (1) pour la production d'un mat de matière dispersée (80),
qui est formé sur une bande de formage (70) circulant en continu agencée dans le sens de la chute d'une matière dispersée (99) sous une tête de dispersion (30),
dans lequel la matière dispersée (99) est reçue au moins temporairement dans un réservoir de dosage (10) et est fournie avec un dispositif de distribution (20) d'une ouverture de chargement (32) d'une tête de dispersion (30) pour la manipulation et/ou la dispersion de la matière dispersée (99) au moyen d'au moins un ensemble de rouleaux avec des rouleaux (341, 351, 401, 502) sur la bande de formage (70) agencée sous la tête de dispersion (30) pour la production d'au moins une partie du mat de matière dispersée (80),
**caractérisé en ce que**
pour la modification des propriétés de dispersion de la tête de dispersion (30), le chargement de la matière dispersée (99) est effectué entre une première zone de chargement (321 ; 331) et au moins une seconde zone de chargement (322 ; 332) de la tête de dispersion (30) espacée de celle-ci dans le sens de production (P), dans lequel le chargement de la matière dispersée (99) est effectué dans la tête dispersée (30) au moyen d'un dispositif de guidage (21) commutable au choix entre la première (321 ; 331) et la seconde zone de chargement (322 ; 332), et
au moins un, de préférence tous les rouleaux (341, 351, 401, 502) de l'ensemble de rouleaux sont modifiés dans leur sens de rotation.

13. Procédé selon la revendication 12, pour lequel un dispositif de d'évacuation (11) agencé dans le réservoir de dosage (10) du dispositif de distribution (20) est commandé de sorte que la matière dispersée (99) soit accélérée de manière méthodique sur des bandes paraboliques dépendant de la vitesse et fournie ainsi au choix à une zone de chargement (321, 322 ; 331, 332).

14. Procédé selon l'une quelconque des revendications précédentes 12 à 13, pour lequel les rouleaux (341, 351 ; 401, 501) d'un dispositif de résolution (34), d'un dispositif de répartition (35) optionnel et/ou d'un dispositif d'orientation (40, 50) et/ou de dispersion tournent en fonction de la zone de chargement (321, 331 ; 322, 332) choisie dans ou dans le sens inverse au sens de production (P), de préférence de manière à correspondre au dispositif de résolution (34).

15. Procédé selon l'une quelconque des revendications précédentes 12 à 14, pour lequel un dispositif de commande (22) règle des éléments machine variables du dispositif de distribution (20) et/ou de la tête de dispersion de manière à correspondre à la zone de chargement (321, 322 ; 331, 332) choisie respectivement.
